# EUROPEAN PATENT SPECIFICATION

(11) **EP 0 980 190 B1**
(45) Date of publication and mention of the grant of the patent: **03.11.2004**
(21) Application number: 98115149.1
(22) Date of filing: 12.08.1998
(51) Int. Cl.: H04Q 7/38, H04Q 7/32

(54) **Multi-mode telecommunication device for channel selection**
Multimode Telekommunikationsgerät zur Kanalauswahl
Dispositif de télécommunication multimode de sélection d'un canal

(43) Date of publication of application: 16.02.2000
(73) Proprietor: SIEMENS AKTIENGESELLSCHAFT, 80333 München (DE)
(72) Inventor: Koehne, Leif, 9310 Vodskov (DK); Kristensen, Oluf, 9440 Aabybro, Biersted (DK)

(56) References cited:
- EP-A- 0 779 751
- EP-A- 0 781 064
- EP-A- 0 793 395
- EP-A- 0 823 789
- WO-A-96/33587
- US-A- 5 504 803

## Description

### BACKGROUND OF THE INVENTION

The invention relates to a telecommunication device, particularly a mobile phone, being able to communicate in at least one technically supported telecommunication mode having a plurality of telecommunication bands or in a plurality of technically supported telecommunication modes each having at least one telecommunication band, each telecommunication mode having an associated telecommunication network, comprising a transceiving means for transmitting and receiving telecommunication signals and a controlling means for controlling said transceiving means.

Although applicable to any telecommunication device, the present invention and its underlying problems will be discussed with particular reference to mobile phones.

Mobile phones, these may be cellular network or satellite network based, are known in a great variety today. Each mobile phone system, such as GSM, has at least one technically supported communication or operation mode which is typically characterised by specific technical standards, f.e. network communication schemes or protocols, modulation schemes etc. Each operation mode has one or more utilised frequency bands and/or radio channels.

Each mobile phone system requires specific mobile phones designed for operation in accordance with the technical specifications of the particular system. Mobile phones having a single mode of operation are referenced as single mode mobiles hereinafter.

Around the world several mobile phone systems are operated in various geographic regions, partly controlled by the radio frequency spectrum government regulations applied in each region and partly controlled by political and historical backgrounds.

Table I below shows some examples of cellular systems, grouped into Mode of Operation, frequency bands and regions.

**TABLE I:**

| Examples of Mobile Phone Systems | | |
|---|---|---|
| Mode of Operation | Frequency Band(s) | Region |
| AMPS | TX: 824-851 MHz | North America |
| | RX: 869-896 MHz | |
| E-TACS | TX: 890-915 MHz | United Kingdom |
| | RX: 935-960 MHz | South Europe |
| CDMA IS-95 | TX: 824-849 MHz | North America |
| | RX: 859-894 MHz | South America |
| | TX: 1850-1910 MHz Bands | Asia-Pacific |
| | A-F | |
| | RX: 1930-1990 MHz Bands | |
| | A-F | |
| GSM 900 | TX: 880-915 MHz | European Community |
| GSM 1800 | RX: 925-960 MHz | Eastern Europe |
| GSM 1900 | TX: 1710-1785 MHz | Middle-East |
| | RX: 1805-1880 MHz | Asia-Pacific |
| | TX: 1850-1910 MHz Bands | North America |
| | A-F | |
| | RX: 1930-1990 MHz Bands | |
| | A-F | |
| D-AMPS | 800 MHz | North America |
| IS-54/IS-136 | TX: 1850-1910 MHz Bands | South America |
| | A-F | Asia-Pacific |
| | RX: 1930-1990 MHz Bands | |
| | A-F | |
| Iridium | TX: 2.5 GHz | Globally |
| | RX: 1.6 GHz | |
| UMTS | Details in UTMS Alpha Evaluation Document | Intends to be global |

For example, as seen from Table I, GSM can be operated in 3 frequency bands. Mobiles able to operate in the GSM system in more than one frequency band are referenced as Single Mode, Multi Band mobiles hereinafter. An example of this kind of equipment is the product Bosch World 718, which provides GSM 900 and GSM 1900 operation as shown in Table II below.

**TABLE II:**

| Bosch World 718 | | |
|---|---|---|
| | Mode of Operation & Frequency Band | |
| Region | GSM | |
| | 900 MHz | 1900 MHz |
| European Community | Y | N |
| USA | N | Y |

Another example is the product Bosch Dual-Com 738, which provides GSM 900 and GSM 1800 operation including in-call handoff between frequency bands as shown in Table III below.

**TABLE III:**

| Bosch Dual-Com 738 | | |
|---|---|---|
| | Mode of Operation & Frequency Band | |
| Region | GSM | |
| | 900 MHz | 1800 MHz |
| EC | Y | Y |

Mobiles able to operate in more than one Mode of Operation; i.e. on more than one system are characterised as Multi Mode mobiles. An example of this kind of equipment is the Qualcomm QPC-800 mobile phone able to operate in both the CDMA and AMPS system as shown in Table IV below.

**TABLE IV:**

| Qualcomm QCP-800 | | |
|---|---|---|
| | Mode of Operation & Frequency Band | |
| Region | CDMA | AMPS |
| | 800 MHz | 800 MHz |
| USA | Y | Y |

The Qualcomm product deals with the problem of operation mode and frequency band selection in the following way. In such cases, where the network operator operates more systems in the same geographic area, the problem is dealt with in the network infrastructure in order to maximise the utilisation of scare network resources. This implies two disadvantages. On one hand, manufacturers of digital mobile phones are faced with some bindings from network operator side when constructing. This allows no flexibility. All possible system configurations have to be checked with network operators in advance. On the other hand, in case of interregional mobility, the problem cannot be dealt with in the network infrastructure because of different network operators. Thus, the Qualcomm solution is not transparent to regional borders.

Mobiles for operation on satellite based systems, e.g. Iridium, are able to operate world-wide as shown in Table V below, but they suffer from limitations on capacity, operating costs etc.

**TABLE V:**

| Iridium phone | |
|---|---|
| Mode of operation & Frequency Band | |
| Region | Iridium |
| | 1.6/2.5 GHz |
| Asia | Y |
| Africa | Y |
| North America | Y |
| South America | Y |
| Europe | Y |
| North Pole Area | Y |
| South Pole Area | Y |

All four examples of the prior art given above suffer from the limitations in regions and operation modes or have other disadvantages; i.e. no real universal phones are available.

A person skilled in the art might propose to construct a mobile which is technically able to operate in all known modes of operation in all regions of the world. However, certain problems are faced in doing this as described in the following.

A consumer multi mode mobile is requested to be able to operate in all regions of the world supporting all known modes of operation and provide low operation costs. The problem encountered with multi mode mobiles is of regulatory art. Due to radio frequency government regulations applied in each region and political decisions on which systems may operate in specific regions, severe difficulties are faced when applying for type approvals of multi mode mobiles.

Table VI below shows the problem of dealing with a plurality of regions, modes of operation and frequency bands.

**TABLE VI:**

| Regional Availability of Modes and Bands | | | | | | | | |
|---|---|---|---|---|---|---|---|---|
| | Mode of Operation & Frequency Bands | | | | | | | |
| Region | M1 | | | M2 | | | - | Mi |
| | B1 | B2 | B3 | B4 | B5 | B6 | - | Bj |
| R1 | Y | N | Y | N | N | N | N | N |
| R2 | N | N | Y | Y | Y | N | N | N |
| - | - | - | - | - | - | - | - | - |
| Rg | - | - | - | - | - | - | - | - |

In Table VI, Rg are different regions, Mi are different modes, and Bj are different frequency bands.

A specific mode of operation, e.g. M1, utilising specific frequency bands, e.g. B1 and B3, may be active in a specific region, e.g. R1, which prohibits some other operating modes, e.g. M2 and M3.

Another region, e.g. R2, allows other operation modes, e.g. M2, and frequency bands, e.g. B4 and B5, in combination with operation mode M1 on frequency band B3.

An important problem is to deal with different regions because no common regulatory frameworks are established between regions.

Pre-requisites for type approvals are the following:
1. The mobile must comply with the spectrum regulations applied in the region, where approval is sought. This can normally easily be achieved for single Mode, single Band mobiles within a specific region.
2. In case this is not achievable by default, one has to demonstrate to the authorities, that the mobile will not cause harm to the existing frequency spectrum. In case one can convince the relevant authorities, it is possible to have approvals granted. This is the typical situation when dealing with multi mode mobiles and single Mode, multi telecommunication band mobiles intended for operation in more than one region.

Thus, the present invention addresses eliminating the need for discussions and negotiations with regulatory authorities as outlined as well as a mobile phone according to the method.

### SUMMARY OF THE INVENTION

The present invention provides a telecommunication device according to claim 1.

A particular advantage of the telecommunication device is that a multi mode or a single mode, multi telecommunication band telecommunication device or mobile according to the invention will automatically satisfy the pre-requisites for type approvals as outline previously. This eliminates some of the problems of developing telecommunication devices such as mobile phones, being more complicate than simple single mode, single telecommunication band mobiles.

The invention provides for free circulation between regions; i.e. there is improved mobility to the end user and minimal need for country specific variants; i.e. there is an optimised production flow.

The principal idea underlying the invention is that the telecommunication device makes a comparison between technically supported modes, subscribed modes and currently available modes.

Preferred embodiments of the present invention are listed in the dependent claims.

According to a preferred embodiment, said registration means for registering in the telecommunication network associated to said selected current telecommunication mode is designed such that it does not transmit any telecommunication signals in a predetermined spectral range, or preferably no telecommunication signals at all, before said selecting means has completed its selection. This has the advantage that there is no disturbance of or interference with said predetermined spectral range, if it turns out later that there is no telecommunication possible in this spectral range in the current region, and thus there will be no regulatory problems.

According to a further preferred embodiment, a second inputting means is provided for inputting a fifth table of preferred telecommunication modes of said subscribed telecommunication modes, and a second storing means for storing said fifth table, wherein said fifth table of preferred modes is part of said predetermined criterium. Thus, the users preferences can be taken into account, f.e. offered services, quality of services, operation costs etc.

According to a further preferred embodiment, said telecommunication bands include frequency bands and/or channels.

According to a further preferred embodiment, said modes are characterised by at least one of specific technical standards, network communication schemes or protocols, modulation schemes and the like.

According to a further preferred embodiment, said first determining means for determining currently available telecommunication telecommunication bands is designed such that for each telecommunication mode it scans the signal strength of a range of corresponding frequency bands and/or channels and determines said currently available telecommunication telecommunication bands based on said signal strength.

According to a further preferred embodiment, said first and second determining means are designed such that they continue their operation after a registration has been performed. By performing these determinations, e.g. asynchronously as background activities, during operation; this enables the telecommunication device or mobile phone to be responsive to mobility; i.e. new locations may offer new telecommunication modes and/or telecommunication bands, and some may disappear.

According to a further preferred embodiment, said transceiving means for transmitting and receiving telecommunication signals is designed such that it operates in the radio frequency spectrum.

According to a further preferred embodiment, said first inputting means for inputting a second table of subscribed telecommunication modes includes at least one of an antenna, a key panel, and a SIM card.

### BRIEF DESCRIPTION OF THE DRAWINGS

The present invention will become more fully understood by the following detailed description of preferred embodiments thereof in conjunction with the accompaying drawings, in which:
- Fig. 1: a preferred embodiment of the telecommunication device according to the present invention in form of a digital mobile phone; and
- Fig. 2: a preferred operation sequence of the digital mobile phone shown in Fig. 1.

### DESCRIPTION OF THE PREFERRED EMBODIMENTS

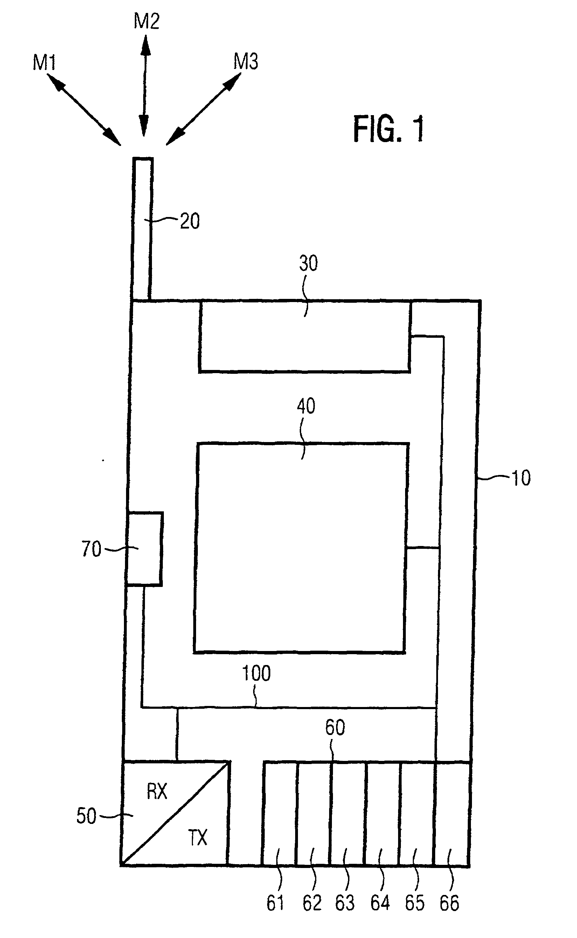

Fig. 1 shows a preferred embodiment of the telecommunication device according to the present invention in form of a digital mobile phone.

In Fig. 1, reference sign M1-M3 designate telecommunication modes, 10 a mobile phone, 20 an antenna, 30 a display, 40 a key panel, 50 a transceiver, 60 a control means including first storing means 61, first determining means 62, second determining means 63, selecting means 64, registration means 65 and second storing means 66, 70 a SIM card, and 100 an internal bus linking all electronic modules.

Other usual components, such as base telecommunication band processing part(s), controlling software part(s) and so on are not shown in Fig. 1 for reasons of clarity.

The mobile phone 10 shown in Fig. 1 is a multi mode mobile phone being able to communicate via radio waves in a repective telecommunication band of the three technically supported telecommunication modes M1-M3, each telecommunication mode M1-M3 having an associated telecommunication network. For simplicity, it is assumed that each modes has two frequency bands and each frequency band has two channels.

Before going into details, the operation of the mobile phone 10 shown in Fig. 1 is described in more general functional terms. Particularly, the operation according to the embodiment described in the following is referred to as "Listen before Transmit principle".

The mobile phone 10 has a certain a priori knowledge, namely the mobile phone 10 holds internal information on which modes of operation (here M1-M3) and frequency bands (here B11, B12, B21, B22, B31, B32) it supports. Information is stored in a so called ME Configuration Table or MECT or apparatively in said first storing means 61.

Subscriber information's data are also available for the mobile phone 10. An internal table called SUBSCRIBER_PRO-FILE holds all information on which modes of operation, frequency bands etc. are available within the current subscription(s) or apparatively in the SIM card 70.

When turned on, firstly, an operation mode and frequency band selection procedure of the control means 60 determines network capabilities in terms of available modes of operation and the corresponding link quality of each frequency band and radio channel. Secondly, the operation mode and frequency band selection procedure compares the results with subscription profiles and user preferences and decides which operation mode, frequency band etc. shall be used for attempting to register in a network. No radio transmission takes place before selection sequence is ended.

Upon completion of the operation mode and frequency band selection procedure, the mobile phone 10 attempts to register to the network according to appropriate specifications. If the registration attempt succeeds, the mobile phone 10 enters normal operation on the selected operation mode and frequency band. If the attempts fail, the mobile returns. to the operation mode and frequency band selection procedure.

Moreover, as a background process to normal operation, the operation mode and frequency band selection procedure is running asynchronously. This provides the mobile to react responsive to mobility; i.e. new locations may change the offered operation modes and/or frequency bands.

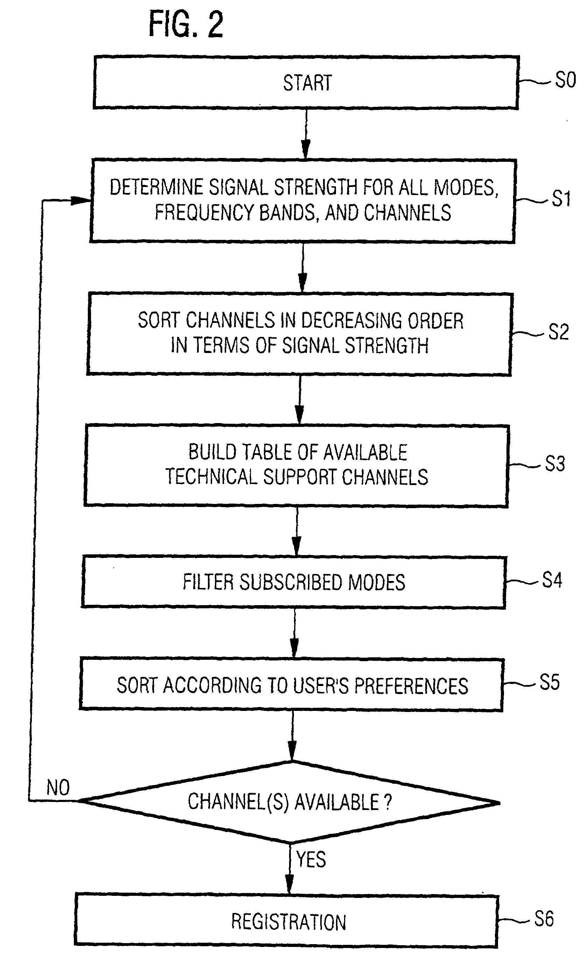

Now, a more detailed description of the construction and function of the mobile phone 10 will be given with particular respect to Fig. 2 showing a preferred operation sequence.

The sequence starts at step S0 after turning on the mobile phone 10. In step S1, the mobile phone 10 scans the frequency spectrum for carriers belonging to each of the operation modes M1-M3 contained in the MECT table. In other words said first determining means 62 scans the signal strength of a range of corresponding frequency bands and associated channels and determines said currently available frequency bands and channels based on the signal strength.

Each scanning is performed according to the nature of current operation mode; i.e. using appropriate telecommunication bandwidth. Scanning results are stored in the mobile in an array or table which is referred to as :
NET_CON_TABLE.POWER ([M]ode, [B]and, [C]hannel)

Scanning may be described by pseudo code as follows:

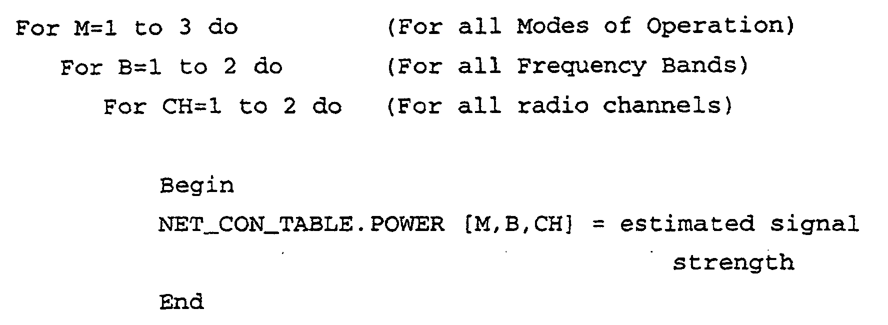

In step S2, the first determining means 62 of the mobile phone 10 sorts the NET_CON_TABLE.POWER array as described by pseudo code:

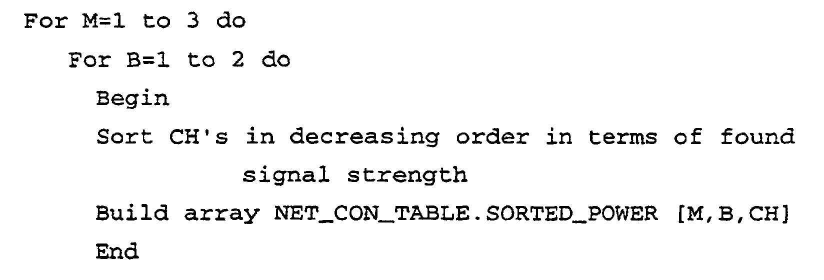

In step 3, the second determining means 63 identifies each of the channels found; i.e. investigates if found channels belongs to any of the telecommunication modes and bands, respectively, listed in the MECT table as described by pseudo code:

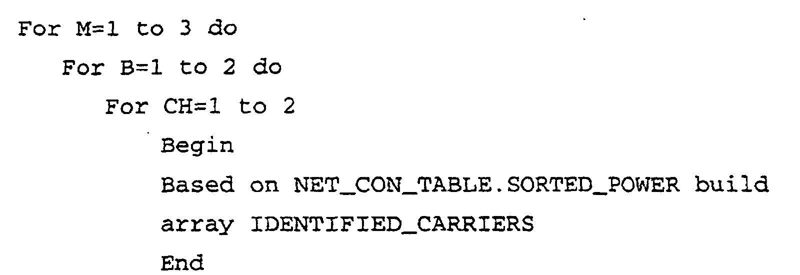

In step S4, common entries of table IDENTIFIED_CARRIERS and table SUBSCRIBER_PROFILE are placed in table LEGAL_CAR-RIERS by the second determining means 63 according to said subscribed telecommunication modes. In other words, subscribed identified modes are filtered from unsubscribed identified modes.

In step S5, the table LEGAL_CARRIERS is sorted according to the user's preferences stored in second storing means 66; i.e. offered services, quality of services, operation costs etc., namely into a table PREFERRED_CARRIERS.

Until this point, the mobile has been completely silent on the air radio interface. There has been no transmission activity, thus no possible interference to alternate use of the spectrum and thus no regulatory problems.

The mobile is now ready to register on the network, if the table LEGAL_CARRIERS is not empty. Otherwise, the sequence cycles back to step S1.

In step S6, the registration means 65 registers in the telecommunication network associated to the most preferred current telecommunication channel according to the mode and band of operation selected and corresponding specifications by the user or the default automatic way in case of no user preferences. As a result of registration procedures, the mobile enters normal operation.

At this point, the mobile for the first time transmits to the network.

Although not explicitely shown in Fig. 2, steps S1-5 are running asynchronously as background activities during operation; this enables the mobile to react responsive to mobility; i.e. new locations may offer new operation modes and/or some operation modes may disappear.

Also, the user may request additional services, not supported by the current Mode of Operation. By manual means, the user forces the mobile to repeat parts of steps S4-5 requesting a specific service, which may not be available on the current operation mode and frequency band.

Although the present invention has been described with respect to preferred embodiments thereof, it should be understood that many modifications can be performed without departing from the scope of the invention as defined by the appended claims.

Particularly, the above operation sequence described in connection with Fig. 2 is just one way to reach the goal. Other operation sequences may lead to the same goal. The goal is that the mobile has made a comparison between supported systems, network offered systems and the subscriber profile, before it registers in the network. Scanning may be done in different ways, e.g. scanning all channels for each operation mode or by any other suited algorithms.

Although in the given example, a plurality of two channels has been assumed, however, usually there are of the order of hundred channels per frequency band.

Although in the given example the transceiving means for transmitting and receiving telecommunication signals is designed such that it operates in the radio frequency spectrum, it can also be designed such that it works in another frequency range or in the optical frequency spectrum.

## Claims

1. A telecommunication device, particularly a mobile phone (10), being able to communicate in at least one technically supported telecommunication mode (M1-M3) having a plurality of telecommunication bands (B1, B2) or in a plurality of technically supported telecommunication modes (M1-M3) each having at least one telecommunication band (B1, B2), each telecommunication mode (M1-M3) having an associated telecommunication network, comprising a transceiving means (50) for transmitting and receiving telecommunication signals and a controlling means (60) for controlling said transceiving means (50), said controlling means (60) including:
a first storing means (61) for storing a first table of said technically supported telecommunication modes and respective telecommunication bands;
a first inputting means (20; 40; 70) for inputting a second table of subscribed telecommunication modes;
a first determining means (62) for determining currently available telecommunication bands based on received telecommunication signals and providing a corresponding third table;
a second determining means (63) for determining which of the currently available telecommunication bands on said third table belong to said technically supported telecommunication modes on said first table and to said subscribed telecommunication modes on said second table and providing a corresponding fourth table;
a selecting means (64) for selecting one of said determined telecommunication bands on said fourth table as current telecommunication band based on a predetermined criterium; and
a registration means (65) for registering in the telecommunication network associated to said selected current telecommunication band based on transmitted telecommunication signals.

2. The telecommunication device according to claim 1, wherein said registration means (65) for registering in the telecommunication network associated to said selected current telecommunication mode is designed such that it does not transmit any telecommunication signals in a predetermined spectral range, or preferably no telecommunication signals at all, before said selecting means (64) has completed its selection.

3. The telecommunication device according to claim 1 or 2, further comprising a second inputting means (40) for inputting a fifth table of preferred telecommunication modes of said subscribed telecommunication modes, and a second storing means (66) for storing said fifth table, wherein said fifth table of preferred modes is part of said predetermined criterium.

4. The telecommunication device according to claim 1, 2 or 3, wherein said telecommunication bands include frequency bands each having one or more channels.

5. The telecommunication device according to one of the preceding claims, wherein said telecommunication modes (M1-M3) are **characterised by** at least one of specific technical standards, network communication schemes or protocols, modulation schemes and the like.

6. The telecommunication device according to claim 4, wherein said first determining means (62) for determining currently available telecommunication telecommunication bands is designed such that for each telecommunication mode it scans the signal strength of a range of corresponding frequency bands and/or channels and determines said currently available telecommunication telecommunication bands based on said signal strength.

7. The telecommunication device according to one of the preceding claims, wherein said first and second determining means (62, 63) are designed such that they continue their operation after a registration has been performed.

8. The telecommunication device according to one of the preceding claims, wherein said transceiving means (50) for transmitting and receiving telecommunication signals is designed such that it operates in the radio frequency spectrum.

9. The telecommunication device according to one of the preceding claims, wherein said first inputting means (20; 40; 70) for inputting a second table of subscribed telecommunication modes includes at least one of an antenna (20), a key panel, and a SIM card (70).

## Patentansprüche

1. Telekommunikationsvorrichtung, insbesondere ein Mobiltelefon (10), das in mindestens einer technisch unterstützten Telekommunikationsart (M1 - M3) mit einer Mehrzahl von Telekommunikationsbändern (B1, B2) oder in einer Mehrzahl von technisch unterstützten Telekommunikationsarten (M1 - M3) mit jeweils mindestens einem Telekommunikationsband (B1, B2) kommunizieren kann, wobei jede Telekommunikationsart (M1 - M3) ein zugeordnetes Telekommunikationsnetz aufweist, das ein Sende- und Empfangsmittel (50) zum Senden und Empfangen von Telekommunikationssignalen und ein Steuermittel (60) zum Steuern des Sende- und Empfangsmittels (50) umfaßt,
wobei das Steuermittel (60) folgendes umfaßt:
ein erstes Speichermittel (61) zum Speichern einer ersten Tabelle der technisch unterstützten Telekommunikationsarten und jeweiligen Telekommunikationsbänder;
ein erstes Eingabemittel (20; 40; 70) zum Eingeben einer zweiten Tabelle von angemeldeten Telekommunikationsarten;
ein erstes Bestimmungsmittel (62) zum Bestimmen von zur Zeit verfügbaren Telekommunikationsbändern auf der Basis von empfangenen Telekommunikationsignalen, und zum Bereitstellen einer entsprechenden dritten Tabelle;
ein zweites Bestimmungsmittel (63) zum Bestimmen, welches von den zur Zeit verfügbaren Telekommunikationsbändern in der dritten Tabelle zu den technisch unterstützten Telekommunikationsarten in der ersten Tabelle und zu den angemeldeten Telekommunikationsarten in der zweiten Tabelle gehören, und zum Bereitstellen einer entsprechenden vierten Tabelle;
ein Wählmittel (64) zum Wählen von einem der bestimmten Telekommunikationsbänder in der vierten Tabelle als laufendes Kommunikationsband auf der Basis eines vorgegebenen Kriteriums; und
ein Registriermittel (65) zur Registrierung in dem Telekommunikationsnetz, das dem gewählten laufenden Telekommunikationsband zugeordnet ist, auf der Basis von gesendeten Telekommunikationssignalen.

2. Telekommunikationsvorrichtung nach Anspruch 1, wobei das Registriermittel (65) zur Registrierung in dem Telekommunikationsnetz, das der gewählten laufenden Telekommunikationsart zugeordnet ist, derart ausgelegt ist, daß es in einem vorgegebenen Spektrumsbereich keine Telekommunikationssignale oder vorzugsweise überhaupt keine Telekommunikationssignale sendet, bis das Wählmittel (64) seine Wahl abgeschlossen hat.

3. Telekommunikationsvorrichtung nach Anspruch 1 oder 2, ferner mit einem zweiten Eingabemittel (40) zum Eingeben einer fünften Tabelle von bevorzugten Telekommunikationsarten der angemeldeten Telekommunikationsarten, und einem zweiten Speichermittel (66) zum Speichern der fünften Tabelle, wobei die fünfte Tabelle von bevorzugten Betriebsarten Teil des vorgegebenen Kriteriums ist.

4. Telekommunikationsvorrichtung nach Anspruch 1, 2 oder 3, wobei die Telekommunikationsbänder Frequenzbänder mit jeweils einen oder mehreren Kanälen umfassen.

5. Telekommunikationsvorrichtung nach einem der vorhergehenden Ansprüche, wobei die Telekommunikationsarten (M1 - M3) durch mindestens eines von spezifischen technischen Standards, Netzkommunikationsmustern oder - protokollen, Modulationsmustern und dergleichen gekennzeichnet sind.

6. Telekommunikationsvorrichtung nach Anspruch 4, wobei das erste Bestimmungsmittel (62) zum Bestimmen von zur Zeit verfügbaren Telekommunikationsbändern derart ausgelegt ist, daß es für jede Telekommunikationsart die Signalstärke eines Bereichs von entsprechenden Frequenzbändern und/oder -kanälen abtastet und die zur Zeit verfügbaren Telekommunikationsbänder auf der Basis der Signalstärke bestimmt.

7. Telekommunikationsvorrichtung nach einem der vorhergehenden Ansprüche, wobei das erste und das zweite Bestimmungsmittel (62, 63) derart ausgelegt sind, daß diese ihren Betrieb fortsetzen, nachdem eine Registrierung erfolgt ist.

8. Telekommunikationsvorrichtung nach einem der vorhergehenden Ansprüche, wobei das Sende- und Empfangsmittel (50) zum Senden und Empfangen von Telekommunikationssignalen derart ausgelegt ist, daß es in dem Funkfrequenzpektrum funktioniert.

9. Telekommunikationsvorrichtung nach einem der vorhergehenden Ansprüche, wobei das erste Eingabemittel (20; 40; 70) zum Eingeben einer zweiten Tabelle von angemeldeten Telekommunikationsarten mindestens eines von einer Antenne (20), einem Tastenfeld und einer SIM-Karte (70) umfaßt.

## Revendications

1. Dispositif de télécommunications, en particulier, téléphone mobile (10) étant capable de communiquer sous au moins un mode de télécommunications (M1 à M3) techniquement pris en charge, ayant une pluralité de bandes de télécommunications (B1, B2) ou sous une pluralité de modes de télécommunications (M1 à M3) techniquement pris en charge, ayant chacun au moins une bande de télécommunications (B1, B2), chaque mode de télécommunications (M1 à M3) ayant un réseau de télécommunications associé, comprenant un moyen d'émission/réception (50) destiné à émettre et à recevoir des signaux de télécommunications et un moyen de commande (60) destiné à commander ledit moyen d'émission/réception (50), ledit moyen de commande (60) comprenant :
un premier moyen de mémorisation (61) destiné à mémoriser une première table desdits modes de télécommunications techniquement pris en charge et desdites bandes de télécommunications respectives ;
un premier moyen d'entrée (20 ; 40 ; 70) destiné à introduire une deuxième table de modes de télécommunications souscrits ;
un premier moyen de détermination (62) destiné à déterminer des bandes de télécommunications actuellement disponibles, sur la base de signaux de télécommunications reçus et destiné à fournir une troisième table correspondante ;
un deuxième moyen de détermination (63) destiné à déterminer lesquelles des bandes de télécommunications actuellement disponibles de ladite troisième table appartiennent aux dits modes de télécommunications techniquement pris en charge de ladite première table et aux dits modes de télécommunications souscrits de ladite deuxième table, et destiné à fournir une quatrième table correspondante ;
un moyen de sélection (64) destiné à sélectionner l'une desdites bandes de télécommunications déterminées dans ladite quatrième table, en tant que bande actuelle de télécommunications, sur la base d'un critère prédéterminé ; et
un moyen d'enregistrement (65) destiné à effectuer un enregistrement dans le réseau de télécommunications associé à ladite bande de télécommunications actuelle sélectionnée, sur la base de signaux de télécommunications émis.

2. Dispositif de télécommunications selon la revendication 1, dans lequel ledit moyen d'enregistrement (65), destiné à effectuer un enregistrement dans le réseau d e télécommunications associé audit mode de télécommunications actuel sélectionné est conçu de telle sorte qu'il n'émet aucun signal de télécommunications dans un domaine spectral prédéterminé ou de préférence, qu'il n'émet aucun signal de télécommunication, avant que le moyen de sélection (64) n'ait achevé sa sélection.

3. Dispositif de télécommunications selon la revendication 1 ou 2, comprenant en outre, un deuxième moyen d'entrée (40) destiné à introduire une cinquième table de modes de télécommunications préférés desdits modes de télécommunications souscrits, et un deuxième moyen de mémorisation (66) destiné à mémoriser ladite cinquième table, dans lequel ladite cinquième table de modes préférés fait partie dudit critère prédéterminé.

4. Dispositif de télécommunications selon la revendication 1, 2 ou 3, dans lequel lesdites bandes de télécommunications comprennent des bandes de fréquences ayant chacune un ou plusieurs canaux.

5. Dispositif de télécommunications selon l'une quelconque des revendications précédentes, dans lequel lesdits modes de télécommunications (M1 à M3) sont caractérisés au moins par des normes techniques spécifiques ou des systèmes ou protocoles de communication sur réseau ou des systèmes de modulation ou analogues.

6. Dispositif de télécommunications selon la revendication 4, d ans lequel ledit premier moyen de détermination (62) destiné à déterminer des bandes de télécommunications actuellement disponibles, est conçu de telle sorte que pour chaque mode de télécommunications, il balaie l'intensité des signaux d'une plage de bandes de fréquences et/ou de canaux correspondants et il détermine lesdites bandes de télécommunications actuellement disponibles, sur la base de ladite intensité des signaux.

7. Dispositif de télécommunications selon l'une quelconque des revendications précédentes, dans lequel lesdits premier et deuxième moyens de détermination (62, 63) sont conçus de telle sorte qu'ils poursuivent leur fonctionnement après qu'un enregistrement a été effectué.

8. Dispositif de télécommunications selon l'une quelconque des revendications précédentes, dans lequel ledit moyen d'émission/réception (50) destiné à émettre et à recevoir des signaux de télécommunications est conçu de telle sorte qu'il fonctionne dans le spectre des radiofréquences.

9. Dispositif de télécommunications selon l'une quelconque des revendications précédentes, dans lequel ledit premier moyen d'entrée (20 ; 40 ; 70) destiné à introduire une deuxième table de modes de télécommunications souscrits comprend au moins une antenne (20) ou un clavier ou une carte SIM (70).
